# EUROPÄISCHE PATENTANMELDUNG

(11) **EP 1 143 324 A1**
(43) Veröffentlichungstag der Anmeldung: **10.10.2001**
(21) Anmeldenummer: 01108753.3
(22) Anmeldetag: 06.04.2001
(51) Int. Cl.: G06F 1/00

(54) **Verfahren und Vorrichtung zum änderbaren Definieren von Zugriffsrechten auf Computerdateien**

(30) Priorität: 06.04.2000 WO PCT/DE00/01065
(71) Anmelder: Wespel, Thomas, 88487 Mietingen (DE)
(72) Erfinder: Wespel, Thomas, 88487 Mietingen (DE)
(74) Vertreter: Kiessling, Christian

(57) **Zusammenfassung**

Bei einer Datenverarbeitungsanlage mit einer Prozessoreinheit, einem Arbeitsspeicher und einer Datenträgereinheit, einer Eingabeeinheit zum Eingeben von Daten und einer Ausgabeeinheit zum Ausgeben von Daten sowie einer Netzwerksteuerungseinheit und einer bidirektionalen Schnittstelle, über die die Datenverarbeitungsanlage mit einer Mehrzahl von untereinander verbundenen Datenverarbeitungsanlagen vernetzbar ist, sowie einem Zugriffsfilter zum Definieren von Zugriffsrechten für auf der Datenträgereinheit gespeicherten Daten, wird eine leichte Änderbarkeit des Sicherungscodes des Zugriffsfilters dadurch erreicht, dass das Zugriffsfilter in einem Eingangs-/Ausgangs-Werk (IO-Controller) der Datenverarbeitungsanlage zwischen dem Arbeitsspeicher einerseits und der Datenträgereinheit sowie der Netzwerksteuerungseinheit andererseits vorgesehen ist.

## Beschreibung

Die Erfindung betrifft eine Datenverarbeitungsanlage mit einer Prozessoreinheit, einem Arbeitsspeicher und einer Datenträgereinheit, einer Eingabeeinheit zum Eingeben von Daten und einer Ausgabeeinheit zum Ausgeben von Daten sowie einer Netzwerksteuerungseinheit und einer bidirektionalen Schnittstelle, über die die Datenverarbeitungsanlage mit einer Mehrzahl von untereinander verbundenen Datenverarbeitungsanlagen vernetzbar ist, sowie einem Zugriffsfilter zum Definieren von Zugriffsrechten für auf der Datenträgereinheit gespeicherten Daten.

Datenverarbeitungsanlagen der eingangs genannten Art sind universal einsetzbar, um vorgegebene Daten in digitaler Form zu speichern und gegebenenfalls gemäß den Prozessschritten vorgegebener Programme umzuorganisieren.

Auf diese Weise sind unterschiedlichste Manipulationen an den Daten durch Definition vorgebbarer Operationen an den Daten durchführbar. Die betroffenen Daten können dabei Eigentum einer Person oder einer privaten oder öffentlichen Einrichtung sein, so dass geeignete Maßnahmen zur Sicherung und Geheimhaltung der Daten erforderlich sind. Herkömmlicherweise wird eine derartige Datensicherung mit Hilfe von Zugriffsfiltern erreicht, wobei gegenüber der Datenverarbeitungsanlage eine Zugangslegitimation durch Eingabe eines Sicherungswortes in die Datenverarbeitungsanlage erfolgt. Die betreffenden Zugriffsfilter sind dabei herkömmlicherweise in einem Datenträger der Datenverarbeitungsanlage gespeichert. Für im Einzelbetrieb geschaltete, nicht mit anderen Datenverarbeitungsanlagen in einem Netzwerk, wie einem firmeneigenen Intranet oder dem weltweiten Internet miteinander verbundene Datenverarbeitungsanlagen ist dies ohne Nachteil. Ist jedoch eine Mehrzahl von Datenverarbeitungsanlagen zu einem Netzwerk zusammengeschlossen, so ist es wünschenswert, den Zugriffsfilter für eine beliebige der Mehrzahl von Datenverarbeitungsanlagen über eine andere der Mehrzahl von Datenverarbeitungsanlagen desselben Netzwerkes extern ändern zu können, um dadurch die Sicherheit der Gesamtheit von in dem Verbund der vernetzten Datenverarbeitungsanlagen gespeicherten Daten zu erhöhen.

In US 5,263,147 ist ein Verfahren zur Überwachung eines Arbeitsspeichers eines Computersystems beschrieben, wobei dieses Verfahren von spezieller Hardware abhängig ist und auf ein für diese spezielle Hardware passendes Computersystem (hier IBM 386) beschränkt ist. Bei diesem Verfahren können Zugriffsrechte nur für das Lesen und Schreiben von Speicherseiten des Arbeitsspeichers vergeben werden. Das Verfahren arbeitet auf der Grundlage einer Überwachung des Arbeitsspeichers. Dabei wird eine I/O-Operation abgebrochen, wenn der Arbeitsspeicher nicht beschrieben werden darf. Dieses bekannte Verfahren arbeitet somit mit Hilfe eines Filters, das im Gegensatz zu dem Filter der erfindungsgemäßen Vorrichtung auf den Arbeitsspeicher eines Computersystems wirkt, nicht jedoch auf dessen I/O-Schiene. Ein dort offenbarter Eingangs/Ausgangs- Treiber (input/output driver) ist eine Software zum Aktivieren, Deaktivieren und Adaptieren von externer Hardware eines Computers. Dies hat zur Folge, dass bei dem bekannten Verfahren Zugriffsrechte nicht universell vergeben werden können, und insbesondere nicht, wie bei der Erfindung, auf sowohl externe als auch interne, zukünftig zu erstellende oder bereits existente Dateien oder Verzeichnisse vergeben werden können, da nur die erfindungsgemäß als Filterlokation verwendete I/0-Schiene eine in jedem EDV-System vorhandene Verbindungsschiene darstellt, die alle Dateien oder Verzeichnisse auf dem Weg zu der Prozessoreinheit des EDV-Systems notwendigerweise passieren müssen

Aus US 5,502,766 ist ein System zum Sichern von Daten bekannt, bei dem eine mittels eines Schlüssels zu betätigender Verschlüsselungseinrichtung benutzt werden kann, um feste und wechselbare Datenträger zu lesen, wobei ein Universal-Datenschlüssel vorgesehen ist, um alle anderen Schlüssel des Systems zu schützten. Bei korrekter Eingabe einer PIN-Nummer werden in dem System verschlüsselt gespeicherte Daten durch den Verschlüsselungscontroller entschlüsselt und so dem Benutzer des Systems zur Verfügung gestellt. Es handelt sich demnach insgesamt um ein in einem System mittels Software implementierten Verfahren zur Verschlüsselung vorherbestimmter Daten.

Aus der US 6,041,411 ist ein Verfahren bekannt, mit dessen Hilfe ein Vertrieb von Software über e-commerce auf sichere Weise ermöglicht ist, um Software-Piraterie bzw. Raubkopien vorbeugen zu können. Dabei werden Zugriffsrechte auf bereits bestehende Dateien oder Verzeichnisse, die im eigenen System oder in entfernten System gespeichert sind, nicht vergeben. Entsprechend ist auch in dieser Druckschrift das Merkmal des kennzeichnenden Teils des Patentanspruchs 1 der Erfindung nicht offenbart und es werden darüber hinaus dem Fachmann auch keinerlei Anregungen gegeben, ein Zugriffsfilter auf die erfindungsgemäße Weise zu betreiben. Auch dieses bekannte Verfahren beruht lediglich auf einer Verschlüsselung von Dateien und bedient sich nicht des viel allgemeineren und weitreichenderen Konzeptes der Erfindung.

Aufgabe der Erfindung ist es deshalb, eine Datenverarbeitungsanlage zu schaffen, bei der eine leichte Änderbarkeit des Sicherungscodes des Zugriffsfilters ermöglicht ist.

Für eine Datenverarbeitungsanlage der eingangs genannten Art wird diese Aufgabe dadurch gelöst, dass das Zugriffsfilter in einem Eingangs-/Ausgangs-Werk (I/O-Werk oder IO-Controller) der Datenverarbeitungsanlage zwischen dem Arbeitsspeicher einerseits und der Datenträgereinheit sowie der Netzwerksteuerungseinheit andererseits vorgesehen ist (das Zugriffsfilter ist somit ein spezielles IO-Controllerfilter). Das Eingangs/Ausgangs-Werk ist dabei eine auf einen internen Datenbus des Computers wirkende Anpassschaltung für externe Daten. Externe Daten werden in einem Eingangs/Ausgangs-Werk bezüglich Seriellität oder Parallelität und Übertragungsgeschwindigkeit an die Vorgaben eines internen Datenbusses angepasst.

Aufgrund der erfindungsspezifischen Positionierung des Zugriffsfilters ist insbesondere ein externer Zugriff auf das Zugriffsfilter ermöglicht, und es wird mit dem erfindungsgemäß positionierten Filter quintessentiell erreicht, daß eine Datenverarbeitungsanlage geschaffen ist, mittels derer Zugriffsrechte auf sowohl externe als interne zukünftig zu erstellende oder bereits existente Dateien oder Verzeichnisse vergeben werden können, da die I/0-Schiene eine in jedem EDV-System vorhandene Verbindungsschiene darstellt, die alle Dateien oder Verzeichnisse auf dem Weg zu der Prozessoreinheit des EDV-Systems notwendigerweise passieren müssen.

Bevorzugte Ausführungsformen der Erfindung sind Gegenstand der Unteransprüche.

Bei der erfindungsgemäßen Datenverarbeitungsanlage wird durch das Merkmal, dass das Zugriffsfilter in einem Eingangs-/Ausgangs-Werk (IO-Controller) der Datenverarbeitungsanlage zwischen dem Arbeitsspeicher einerseits und der Datenträgereinheit sowie der Netzwerksteuerungseinheit andererseits vorgesehen ist, erreicht, dass das erfindungsgemäße Filter unabhängig von einer spezifischen Auslegung sowohl eines Prozessors als auch eines Arbeitsspeichers Computers arbeitet, so dass es für eine Mehrzahl unterschiedlicher, jeweils solitär geschalteter Prozessoren verwendbar ist, auf der anderen Seite aber auch für Rechner verwendbar ist, in denen eine Mehrzahl von Prozessoren parallel geschaltet ist. Dem entsprechend ist es bei dem erfindungsgemäßen Filter ermöglicht, bei einem vorhergegebenen Computer einen ersten Prozessor durch einen anderen Prozessor auszutauschen oder einen weiteren Prozessor hinzuzufügen, oder einen ersten Arbeitsspeicher durch einen anderen auszutauschen oder einen weiteren Arbeitsspeicher hinzuzufügen.

Das im Eingangs/Ausgangs-Werk (I/O-Werk) eines Computers lokalisierte erfindungsgemäße Filter arbeitet als ein Filtertreiber, der einer Liste kommuniziert, die in dem Arbeitsspeicher des Computers gespeichert ist, wobei in dieser Liste eine Vergabe von Rechten von unterschiedlichen Masken und Pfaden definiert ist. Der Filtertreiber wird dabei gesteuert von dem Prozessor, wobei der Prozessor ständig die das I/O-Werk passieren Informationen überwacht, indem er sie vergleicht mit Informationen, die in der betreffenden Liste im Arbeitsspeicher abgespeichert sind. Wir haben also einen Prozessor, dessen Funktionalität teilweise darauf abgestellt ist, über im Arbeitsspeicher gespeicherte Informationen einen Informationsfluss durch das I/O-Werk zu steuern, bzw. im vorliegenden Fall Zugriffsrechte zu gewähren oder zu verweigern. Allgemein gesprochen besteht ein digitales Filter grundsätzlich wie auch im vorliegenden Fall aus einem Speicher, in dem die Information über einen Filtervorgang gespeichert ist und einer Prozessoreinheit:, die auf diesen Speicher zugreift und eingehende Daten auf Übereinstimmung mit der in dem Speicher gespeicherten Information vergleicht und bei Übereinstimmung Befehle einer ersten Art und bei Nicht-Übereinstimmung Befehle einer zweiten Art abgibt, d.h. im Fall der vorliegenden Erfindung ein Zugriffsrecht erteilt oder ein Zugriffsrecht verweigert.

Gemäß der in der vorliegenden Offenbarung gewählten Diktion ist ein Pfad der Speicherort einer Datei, und eine Maske ist eine Beschreibung eines Dateinamens, wobei eine Beschreibung prinzipiell auch Mehrbedeutungszeichen (Joker) enthalten kann. Beispiele für derartige Gruppen von Dateien oder Verzeichnisse sind Dateien, die mit "doc" oder mit "exe" enden, wobei solche Zugriffsrechte unabhängig vom Speicherort, beispielsweise in dem Filter des eigenen Computers auch in denjenigen eines entfernten Computers definiert werden können, wobei durch das Filter beispielsweise vorgebbar ist, dass "exe"-Dateien nicht von einem entfernten Datenträger auf die Festplatte des eigenen Computers herunterladbar sein sollen, bei "doc"-Dateien diese Möglichkeit jedoch bestehen soll.

Des weiteren ist gemäß der in vorliegenden Offenbarung gewählten Diktion der Begriff einer "Definition" aus einem Pfad und einer Maske sowie dem für diesen Pfad und diese Maske gültigen Zugriffsrecht bestehend vorgegeben. Ein Speicherort, ein Dateiname sowie ein Zugriffsrecht zusammengenommen bilden somit eine Definition.

Die Zugriffsrechte sind dabei in der Regel spezifiziert. Als Beispiele für Zugriffsrechte werden angeführt:
- Lesen
- Schreiben
- Ausführen
- Löschen
- Umbenennen
- Erstellen
- Attribute ändern.

Als Beispiele für Mehrbedeutungszeichen werden "*" und "?", angeführt, wobei ein "*" (Wild Card) für eine Mehrzahl beliebiger Buchstaben und ein "?" (Joker) jeweils nur für einen beliebigen Buchstaben stehen kann.

Ein weiterer möglicher Bestandteil einer gemäß der Diktion der vorliegenden Offenbarung vorgegebenen "Definition" sind die sogenannten Unterverzeichnisse. Die Unterverzeichnisse können optional in "Definitionen" eingeschlossen werden.

Generell gesprochen kann ein Pfad Unterpfade enthalten, was in der Regel auch der Fall ist. Damit ein Pfad in seiner Gesamtheit, d. h. einschließlich seiner Unterpfade getroffen wird, ist es notwendig, bei einem Verzeichnis die Unterverzeichnisse mit anzugeben. Ansonsten erkennt der Computer über die Eingabe eines bestimmten Verzeichnisses nur jeweils einen bestimmten Pfad, nicht aber die Unterpfade.

Das erfindungsgemäße Filter weist gegenüber den im Stand der Technik bekannten Filtern den wichtigen Vorteil auf, dass Dateirechte auch so vergeben werden können, dass alle Unterverzeichnisse eines Verzeichnisses bei der Vergabe von Zugriffsrechten über das erfindungsgemäße. Zugriffsfilter automatisch miteingeschlossen sind. Das hat den Vorteil, dass nicht für jedes Unterverzeichnis erneut eine "Definition" erstellt werden muss, sondern dass eine "Definition" Gültigkeit haben kann für einen Pfad mit allen seinen Unterpfaden.

Gemäß einer ersten bevorzugten Ausführungsform der erfindungsgemäßen Datenverarbeitungsanlage ist vorgesehen, dass für alle Verzeichnisse und Dateien aller lokalen sowie vernetzten Datenträger "Sammeldefinitionen" vorgegeben werden, indem Mehrbedeutungszeichen (Wild Cards bzw. Joker) in das System eingebbar sind, mit denen alle in die Anlage eingegebenen Definitionen getroffen werden können. Dadurch ist ein schnelles summarisches Erfassen und Auffinden der betreffenden Verzeichnisse und Dateien ermöglicht.

Gemäß einer weitergehenden bevorzugten Ausführungsform der erfindungsgemäßen Datenverarbeitungsanlage ist vorgesehen, dass die in dem Zugriffsfilter definierten Zugriffsrechte in der Weise hierarchisch geordnet sind, dass auf einer Datei eine Mehrzahl unterschiedlicher, auch Sammeldefinitionen enthaltender Zugriffsrechte vorgebbar ist, wobei die Auswahl einer geltenden Definition von Zugriffsrechten aus der Mehrzahl der auch Sammeldefinitionen enthaltenen Zugriffsrechte über ein Zählen der Anzahl von Zeichen bzw. eine Summenbildung über die Anzahl der Zeichen erfolgt, die zur Definition eines Pfades sowie einer Maske vorgegeben sind. Gemäß einer vorgegebenen Hierarchie, bei der die Rechte einer Datei durch bestimmte Definitionen festgelegt sind, ist dabei vorgesehen, dass solche Definitionen, die ein "Mehr" an Zeichen aufweisen, als genauer definiert erkannt werden als solche Definitionen, die ein "Weniger" an Zeichen aufweisen. Die dem gemäß in einer genauest definierten Definition vorgegebenen Rechte werden dann gemäß dieser Hierarchie ausgeführt und der/den in der Definition beschriebenen Datei(en) oder dem/den in der Definition beschriebenen Verzeichnis(sen) zugewiesen, wobei die in den Übrigen Definitionen vorgegebenen Rechte für diese Datei oder dieses Verzeichnis zurückgewiesen werden. Auf diese Weise ist eine flexible Gestaltung als auch effiziente Durchführung der Auswahl eines geltenden Zugriffsrechtes erreicht.

Gemäß einer weiteren bevorzugten Ausführungsform der erfindungsgemäßen Datenverarbeitungsanlage ist vorgesehen, dass eine Maske auf eine Datei oder ein Verzeichnis verweisen kann. Darüber hinaus kann es vorgesehen sein, dass und ein Pfad auf lokale und/oder vernetzte Datenträger verweist. Die Zugriffsrechte des erfindungsgemäßen IO-Controllerfilters gelten vorzugsweise bidirektional vom lokalen System auf entfernte Datenträger und von entfernten Systemen auf lokale Datenträger, aber eine Änderung der Zugriffsfilterfunktion ist dabei nicht ohne eine lokale Legitimation ermöglicht und insofern nur von dem lokalen System aus vornehmbar. Es ist dabei auch die Möglichkeit dafür gegeben, dass mehrere Systeme auf den lokalen erfindungsgemäßen IO-Controller zugreifen. Auf diese Weise ist ein sicheres Trennen und eine sichere Unterscheidung zwischen Verzeichnissen und Datenträgern unterschiedlicher Datenverarbeitungsanlagen der Mehrzahl miteinander vernetzter Datenverarbeitungsanlagen ermöglicht. Vernetzte Datenträger sind definiert als solche, bei denen Zugriffe ermöglicht sind von einem lokalen System auf ein System eines lokalen Netzwerkes oder eines entfernten Netzwerkes wie beispielsweise dem Internet.

Gemäß einer weiteren bevorzugten Ausführungsform der erfindungsgemäßen Datenverarbeitungsanlage ist vorgesehen, dass die Vergabe von Zugriffsrechten bidirektional erfolgt. Durch dieses Merkmal ist sichergestellt, dass eine Manipulation bzw. Änderung des Zugriffsrechtes einer bestimmten Datenverarbeitungsanlage aus der Mehrzahl untereinander vernetzter Datenverarbeitungsanlagen über jede einzelne der miteinander vernetzten Datenverarbeitungsanlagen vornehmbar ist. Gemäß dieser Ausführungsform der erfindungsgemäßen Datenverarbeitungsanlage sind alle Datenverarbeitungsanlagen einer Mehrzahl miteinander vernetzter Datenverarbeitungsanlagen hierarchisch untereinander gleichgestellt.

Des weiteren ist es bei der erfindungsgemäßen Datenverarbeitungsanlage vorzugsweise vorgesehen, dass die Vergabe von Zugriffsrechten zum einen für Benutzer aus dem Netzwerk für einen Zugriff auf die Datenträger der mit dem Zugriffsfilter geschützten Datenverarbeitungsanlage erfolgt, und zum anderen für lokale Benutzer für einen Zugriff auf lokale oder vernetzte entferne Datenträger erfolgt, wobei die eigenen vorgegebenen Zugriffsrechte auf Zugriffsrechte eines Datenträgers einer vernetzten Datenverarbeitungsanlage überlagert werden. Auf diese Weise wird eine bidirektionale Vergabe von Zugriffsrechten ermöglicht. Diese Ausführungsform beruht auf dem Grundsatz, dass eine Mehrzahl von Zugriffrechten jeweils durch die logische (und)-Verknüpfung miteinander verbunden sind. Dadurch ist sichergestellt, dass eine einzige Restriktion ausreichend ist, um einen Zugriff auf die betreffenden Daten auch dann zu sperren, wenn andere Zugriffsrechte einen Zugriff ermöglichen.

Gemäß einer bevorzugten Ausführungsform der erfindungsgemäßen Datenverarbeitungsanlage ist die Mehrzahl von untereinander verbundenen Datenverarbeitungsanlagen von einem lokalen Intranet beispielsweise einer Firma oder einer Behörde gebildet ist. In Verbindung dazu oder Alternativ kann die Mehrzahl von untereinander verbundenen Datenverarbeitungsanlagen erfindungsgemäß auch von dem weltweiten Internet gebildet sein.

Die Eingabeeinheit zum Eingeben von Daten ist bei der erfindungsgemäßen Datenverarbeitungsanlage vorzugsweise als Tastatureinrichtung ausgeführt. Dadurch ist eine einfache Eingabe und Zuordnung von Daten von Hand von einem Benutzer der erfindungsgemäßen Datenverarbeitungsanlage ermöglicht. Die Ausgabeeinheit zum Ausgeben von Daten ist dabei vorzugsweise als Monitoreinrichtung ausgeführt.

Die erfindungsgemäße Datenverarbeitungsanlage wird im folgenden anhand einer bevorzugten Ausführungsform erläutert, die in der Figur der Zeichnung dargestellt ist. Darin zeigt:

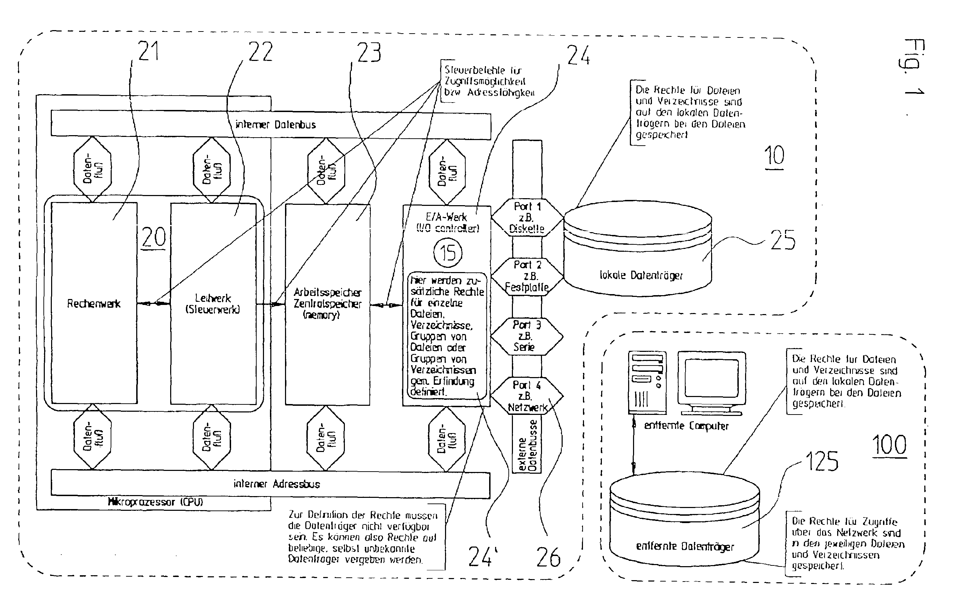

- Fig.1: eine bevorzugte Ausgestaltung der erfindungsgemäßen Datenverarbeitungsanlage in einer schematisierten Darstellung.

Die in Figur 1 dargestellte erfindungsgemäße Datenverarbeitungsanlage 10 weist eine herkömmliche Prozessoreinheit 20, bestehend aus einem Rechenwerk 21 und einem Leitwerk 22, einen Arbeitsspeicher 23 sowie ein Eingangs-/Ausgangs-Werk 24 und eine lokale Datenträgereinheit 25 auf, zusammen mit einer nicht dargestellten Tastatur als Eingabeeinheit zum Eingeben von Daten und einem nicht dargestellten Monitor als Ausgabeeinheit zum Ausgeben von Daten. Des weiteren weist die Datenverarbeitungsanlage 10 eine Netzwerksteuerungseinheit 26 und eine in dem Eingangs-/Ausgangs-Werk 24 vorgesehenen bidirektionalen Schnittstelle 24' auf, über die die Datenverarbeitungsanlage 10 mit einer Mehrzahl von untereinander verbundenen Datenverarbeitungsanlagen 100 vernetzbar ist, sowie ein in dem Eingangs-/Ausgangs-Werk 24 vorgesehenes erfindungsgemäßes Zugriffsfilter 15 zum Definieren von Zugriffsrechten für auf den Datenträgereinheiten 25, 125 gespeicherten Daten. Das Zugriffsfilter 15 ist bei der dargestellten erfindungsgemäßen Datenverarbeitungsanlage 10 erfindungswesentlich in dem Eingangs-/Ausgangs-Werk 24 der Datenverarbeitungsanlage 10 zwischen dem Arbeitsspeicher 23 einerseits und der Datenträgereinheit 25 sowie der Netzwerksteuerungseinheit 22 andererseits vorgesehen ist.

Das Zugriffsfilter 15 ist bei der dargestellten Ausführungsform der erfindungsgemäßen Datenverarbeitungsanlage 10 für einen bidirektionalen Datentransfer ausgelegt. Gemäß anderer Ausführungsformen der Erfindung kann das Zugriffsfilter 15 alternativ auch für einen monodirektionalen Datentransfer ausgebildet sein.

Das oben erläuterte Ausführungsbeispiel der Erfindung dient lediglich dem Zweck eines besseren Verständnisses der durch die Ansprüche vorgegebenen erfindungsgemäßen Lehre, die als solche durch das Ausführungsbeispiel nicht eingeschränkt ist.

## Patentansprüche

1. Datenverarbeitungsanlage mit einer Prozessoreinheit, einem Arbeitsspeicher und einer Datenträgereinheit, einer Eingabeeinheit zum Eingeben von Daten und einer Ausgabeeinheit zum Ausgeben von Daten sowie einer Netzwerksteuerungseinheit und einer bidirektionalen Schnittstelle, über die die Datenverarbeitungsanlage mit einer Mehrzahl von untereinander verbundenen Datenverarbeitungsanlagen vernetzbar ist, sowie einem Zugriffsfilter zum Definieren von Zugriffsrechten für auf der Datenträgereinheit gespeicherten Daten, **dadurch gekennzeichnet, dass** das Zugriffsfilter in einem Eingangs/Ausgangs-Werk (IO-Controller) der Datenverarbeitungsanlage zwischen dem Arbeitsspeicher einerseits und der Datenträgereinheit sowie der Netzwerksteuerungseinheit andererseits vorgesehen ist.

2. Datenverarbeitungsanlage nach Anspruch 1, **dadurch gekennzeichnet, dass** für alle Verzeichnisse und Dateien aller lokalen sowie vernetzten Datenträger "Sammeldefinitionen" vorgegeben werden, indem Mehrbedeutungszeichen (Wild Cards bzw. Joker) in das System eingebbar sind, mit denen alle in die Anlage eingegebenen Definitionen getroffen werden können.

3. Datenverarbeitungsanlage nach Anspruch 1, **dadurch gekennzeichnet, dass** die in dem Zugriffsfilter definierten Zugriffsrechte in der Weise hierarchisch geordnet sind, **dass** auf einer Datei eine Mehrzahl unterschiedlicher, auch Sammeldefinitionen enthaltender Zugriffsrechte vorgebbar ist, wobei die Auswahl einer geltenden Definition von Zugriffsrechten aus der Mehrzahl der auch Sammeldefinitionen enthaltenen Zugriffsrechte über ein Zählen der Anzahl von Zeichen bzw. eine Summenbildung über die Anzahl der Zeichen erfolgt, die zur Definition eines Pfades sowie einer Maske vorgegeben sind.

4. Vorrichtung nach Anspruch 3, **dadurch gekennzeichnet, dass** gemäß einer vorgegebenen Hierarchie festgelegt ist, **dass** solche Definitionen, die ein "Mehr" an Zeichen aufweisen, als genauer definiert erkannt werden als solche Definitionen, die ein "Weniger" an Zeichen aufweisen, wobei die in einer genauesten Definition vorgegebenen Rechte ausgeführt werden und der/den in der Definition beschriebenen Datei(en) oder dem/den in der Definition beschriebenen Verzeichnis(sen) zugewiesen werden, und die in den Übrigen Definitionen vorgegebenen Rechte für diese Datei oder dieses Verzeichnis zurückgewiesen werden.

5. Vorrichtung nach Anspruch 4, **dadurch gekennzeichnet, dass** eine Maske auf eine Datei oder ein Verzeichnis verweisen kann.

6. Vorrichtung nach Anspruch 4, **dadurch gekennzeichnet, dass** ein Pfad auf lokale und/oder vernetzte Datenträger verweist.

7. Datenverarbeitungsanlage nach einem der vorhergehenden Ansprüche, **dadurch gekennzeichnet, dass** die Vergabe von Zugriffsrechten bidirektional vom lokalen System auf entfernte Datenträger und von entfernten Systemen auf lokale Datenträger erfolgt, wobei eine Änderung der Zugriffsfilterfunktion nicht ohne eine lokale Legitimation ermöglicht ist.

8. Datenverarbeitungsanlage nach Anspruch 7, **dadurch gekennzeichnet, dass** die Vergabe von Zugriffsrechten zum einen für Benutzer aus einem Netzwerk für einen Zugriff auf die Datenträger der mit dem Zugriffsfilter geschützten Datenverarbeitungsanlage erfolgt, und zum anderen für lokale Benutzer für einen Zugriff auf lokale oder vernetzte entfernte Datenträger erfolgt, wobei die eigenen Zugriffsrechte auf Zugriffsrechte eines Datenträgers einer der lokalen oder einer vernetzten Datenverarbeitungsanlage überlagert werden.

9. Datenverarbeitungsanlage nach einem der Ansprüche 1 bis 8, **dadurch gekennzeichnet, dass** die Mehrzahl von untereinander verbundenen Datenverarbeitungsanlagen von einem lokalen Intranet gebildet ist.

10. Datenverarbeitungsanlage nach einem der Ansprüche 1 bis 8, **dadurch gekennzeichnet, dass** die Mehrzahl von untereinander verbundenen Datenverarbeitungsanlagen von dem weltweiten Internet gebildet ist.

11. Vorrichtung nach einem der vorhergehenden Ansprüche, **dadurch gekennzeichnet, dass** die Eingabeeinheit zum Eingeben von Daten als Tastatureinrichtung ausgeführt ist.

12. Vorrichtung nach einem der vorhergehenden Ansprüche, **dadurch gekennzeichnet, dass** die Ausgabeeinheit zum Ausgeben von Daten als Monitoreinrichtung ausgeführt ist.
